# EUROPEAN PATENT APPLICATION

(11) **EP 1 301 001 A2**
(43) Date of publication of application: **09.04.2003**
(21) Application number: 02021895.4
(22) Date of filing: 01.10.2002
(51) Int. Cl.: H04L 27/18, H04L 27/34

(54) **Transmission with constellations of a size other than a power of two**

(30) Priority: 02.10.2001 JP 2001305992
(71) Applicant: NEC CORPORATION, Tokyo (JP)
(72) Inventor: Noda, Seiichi, Minato-ku, Tokyo (JP)
(74) Representative: VOSSIUS & PARTNER

(57) **Abstract**

A modulator, a communication system, and a modulation program, in which frequencies and transmission power can be used effectively by using a transmission band without a surplus by making the allowable transmission amount of a communication channel match with the requiring transmission rate, by using also the numbers of multilevel except values of the n th power of 2 in a multilevel modulation suitably, are provided. The modulator, which applies a phase modulation to communication data, provides a storing circuit that stores inputted communication data of binary signals, a converting circuit that converts binary signals of 11 digits into ternary signals of 7 digits, and a multilevel modulator that generates modulation signals based on the ternary signals of 7 digits, and outputs modulated waves.

## Description

The present invention relates to a modulator, a communication system, and a modulation program, in which communication is executed by a multilevel modulation in digital microwave communication.

A multilevel modulation is a modulation system using especially for such as a digital microwave communication, and conventionally, there are a quadrature amplitude modulation (QAM) system and a phase shift keying (PSK) system. Actually, systems based on such as 4QAM, 16QAM, 32QAM, 64QAM, 128QAM, and 256QAM, ... and BPSK (2PSK), QPSK (4PSK), and 8PSK ... are used.

A multilevel signal, generated by the multilevel modulation and to be transmitted, transmits data selected 1 from values 2, 4, 8, 16, ..., at the 1 symbol (1 clock). Therefore, in case of the 4 (= 2 ^ 2) QAM, data of 2 bits at 1 symbol are transmitted, and in case of the 16 (= 2 ^ 4) QAM, data of 4 bits at 1 symbol are transmitted, and in case of the 32 (= 2 ^ 5) QAM, data of 5 bits at 1 symbol are transmitted.

As mentioned above, at the conventional system, from a reason such as that its circuit is simple, the number of multilevel of the multilevel signal is made to be a value of the n th power of 2, such as 2, 4, 8, 16, ....

However, at the conventional technologies, there are following problems.

Conventionally, values (2, 4, 8, 16, 32, ...) of the numbers of multilevel, which can be used as a multilevel signal, are separated largely among them, therefore, it was difficult to use the transmission band of the communication channel effectively. If a number of multilevel, except these conventional numbers of multilevel (2, 4, 8, 16, 32, ...) of the n th power of 2 which are separated largely among them, can be used between two of these conventional numbers, in addition to using these conventional numbers, more various combinations of frequencies and transmission power can be adopted. And the frequency and the transmission power can be used more effectively.

Further, the difficulty to realize the complex circuit structure at a modulation system, in which the number of multilevel is made to be a value except the values of the n th power of 2, has been lessened by the recent progress in the IC technology.

Japanese Patent Application Laid-Open No. HEI 4-196945 discloses a multilevel modulation and demodulation communication method and a system thereof. In this patent application, a system, in which an input data string is allocated to a modulation symbol being general 2 or more value, is proposed. However, in this conventional technology, a general structure of a multilevel modulation using the number of multilevel except the values of the n th power of 2 is only shown.

A technical report shows an apparatus, a communication system, a program, and a method for a multilevel modulation and demodulation. In this technical report, it makes possible that the numbers of multilevel are about 2 ^ (p + 0.5), and a technology, in which multilevel modulations such as 3PSK, 6PSK, 12PSK, ... are realized, is proposed.

However, in this technical report, a method to realize a system transmitting 1.5 bits per symbol in case of the 3PSK is only shown. And in case of the 3PSK, 1.57 1 ... (= 11/7) bits and 1.583 ... (= 19/12) bits per symbol can not be transmitted.

Further, a technical report shows an apparatus, a communication system, a program, and a method for a multilevel modulation and demodulation. In this technical report, it makes possible that the numbers of multilevel are about 2 ^ (p + 0.25), and a technology, in which multilevel modulations such as 10QAM, 20QAM, 40QAM, ... are realized, is proposed.

However, in this technical report, communication by five-phase modulations such as 5PSK, and 5QAM cannot be realized.

It is therefore an object of the present invention to provide a modulator, a communication system, and a modulation program, in which frequencies and transmission power can be used effectively by using the numbers of multilevel except values of the n th power of 2, by solving the problems at the conventional technologies mentioned above.

Moreover, according to the present invention, a modulator, a communication system, and a modulation program, in which the amount of information to be transmitted per symbol in case of 3PSK is realized to be values such as 1.571... (= 11/7) bits and 1.583 ... (= 19/12) bits more than the conventional value of 1.5 bits, are provided, by solving the problems at the conventional technologies mentioned above.

Furthermore, according to the present invention, a modulator, a communication system, and a modulation program, in which communication by 5PSK is realized, are provided, by solving the problems at the conventional technologies mentioned above.

According to a first aspect of the present invention, for achieving the objects mentioned above, there is provided a modulator, which applies a phase modulation to communication data. At the modulator, inputted communication data are converted into plural multilevel signals of predetermined amount of data, and modulation signals based on the converted plural multilevel signals of the predetermined amount of data are outputted sequentially as modulated waves.

According to a second aspect of the present invention, in the first aspect, the modulator provides a storing circuit that stores the inputted communication data, a converting circuit that converts the communication data storing in the storing circuit into the plural multilevel signals of the predetermined amount of data, and a multilevel modulator that generates the modulation signals based on the plural multilevel signals of the predetermined amount of data converted at the converting circuit, and outputs the modulated waves.

According to a third aspect of the present invention, in the second aspect, each of b, C, m, and N is defined as one of integers, and the inputted communication data of C-ary signals are extracted b digits each sequentially from the storing circuit, and extracted C-ary signals of b digits are converted into N-ary signals of m digits sequentially at the converting circuit.

According to a fourth aspect of the present invention, in the third aspect, the integer C being the number of multilevel of inputting communication data is 2.

According to a fifth aspect of the present invention, in the third aspect, at the setting of each value of the integers b, C, m, and N, the value of the m th power of N is larger than the value of the b th power of C, and also the value of the m th power of N is close enough to the value of the b th power of C.

According to a sixth aspect of the present invention, in the third aspect, each value of the integers b, m, and N is decided, based on a currently usable transmission band and a transmission rate to be required for communication data to be transmitted, and the inputted communication data are converted into N-ary signals of m digits, based on the decision.

According to a seventh aspect of the present invention, in the third aspect, each value of the integers is set as b = 11, C = 2, m = 7, and N = 3, and the inputted communication data of binary signals are extracted 11 digits each sequentially, and extracted binary signals of 11 digits are converted into ternary signals of 7 digits sequentially at the converting circuit.

According to an eighth aspect of the present invention, in the third aspect, each value of the integers is set as b = 9, C = 2, m = 4, and N = 5, and the inputted communication data of binary signals are extracted 9 digits each sequentially, and extracted binary signals of 9 digits are converted into 5-ary signals of 4 digits sequentially at the converting circuit.

According to a ninth aspect of the present invention, in the third aspect, the communication data of C-ary signals are inputted to the modulator in series.

According to a tenth aspect of the present invention, in the third aspect, the communication data of C-ary signals are inputted to the modulator in parallel b digits each.

According to an eleventh aspect of the present invention, there is provided a communication system, which executes communication by using multilevel signals. The communication system provides a modulator, which applies a phase modulation to communication data, and a demodulator. And the modulator converts inputted communication data into plural multilevel signals of predetermined amount of data sequentially, and transmits modulation signals based on the converted plural multilevel signals of the predetermined amount of data as modulated waves to the demodulator sequentially.

According to a twelfth aspect of the present invention, in the eleventh aspect, each of b, C, m, and N is defined as one of integers, and the inputted communication data of C-ary signals are extracted b digits each sequentially, and extracted C-ary signals of b digits are converted into N-ary signals of m digits sequentially at the modulator.

According to a thirteenth aspect of the present invention, in the twelfth aspect, the integer C being the number of multilevel of inputting communication data is 2.

According to a fourteenth aspect of the present invention, in the twelfth aspect, at the setting of each value of the integers b, C, m, and N, the value of the m th power of N is larger than the value of the b th power of C, and also the value of the m th power of N is close enough to the value of the b th power of C.

According to a fifteenth aspect of the present invention, in the twelfth aspect, each value of the integers b, m, and N is decided, based on a currently usable transmission band and a transmission rate to be required for communication data to be transmitted, and the inputted communication data are converted into N-ary signals of m digits, based on the decision.

According to a sixteenth aspect of the present invention, in the twelfth aspect, each value of the integers is set as b = 11, C = 2, m = 7, and N = 3, and the inputted communication data of binary signals are extracted 11 digits each sequentially, and extracted binary signals of 11 digits are converted into ternary signals of 7 digits sequentially at the modulator.

According to a seventeenth aspect of the present invention, in the twelfth aspect, each value of the integers is set as b = 9, C = 2, m = 4, and N = 5, and the inputted communication data of binary signals are extracted 9 digits each sequentially, and extracted binary signals of 9 digits are converted into 5-ary signals of 4 digits sequentially at the modulator.

According to an eighteenth aspect, in the twelfth aspect, the communication data of C-ary signals are inputted to the modulator in series.

According to a nineteenth aspect of the present invention, in the twelfth aspect, the communication data of C-ary signals are inputted to the modulator in parallel b digits each.

According to a twentieth aspect of the present invention, there is provided a modulation program, which applies a phase modulation to communication data by controlling a computer. At the modulation program, inputted communication data are converted into plural multilevel signals of predetermined amount of data, and modulation signals based on the converted plural multilevel signals of the predetermined amount of data are outputted sequentially as modulated waves.

According to a twenty-first aspect of the present invention, in the twentieth aspect, each of b, C, m, and N is defined as one of integers, and the inputted communication data of C-ary signals are extracted b digits each sequentially, and extracted C-ary signals of b digits are converted into N-ary signals of m digits sequentially.

According to a twenty-second aspect of the present invention, in the twentieth aspect, the integer C being the number of multilevel of inputting communication data is 2.

According to a twenty-third aspect of the present invention, in the twentieth aspect, at the setting of each value of the integers b, C, m, and N, the value of the m th power of N is larger than the value of the b th power of C, and also the value of the m th power of N is close enough to the value of the b th power of C.

According to a twenty-fourth aspect of the present invention, in the twentieth aspect, each value of the integers b, m, and N is decided, based on a currently usable transmission band and a transmission rate to be required for communication data to be transmitted, and the inputted communication data are converted into N-ary signals of m digits, based on the decision.

According to a twenty-fifth aspect of the present invention, in the twentieth aspect, the communication data of C-ary signals are inputted in series.

According to a twenty-sixth aspect of the present invention, in the twentieth aspect, the communication data of C-ary signals are inputted in parallel b digits each.

The objects and features of the present invention will become more apparent from the consideration of the following detailed description taken in conjunction with the accompanying drawings in which:
Fig. 1 is a block diagram showing a structure of a modulator at a first embodiment of the present invention;
Fig. 2 is a flowchart showing the operation of the modulator at the first embodiment of the present invention;
Fig. 3 is a block diagram showing a structure of a communication system using the modulator at the first embodiment of the present invention;
Fig. 4 is a block diagram showing a structure of a modulator at a first example of the first embodiment of the present invention;
Fig. 5 is a timing chart showing the operation of the modulator at the first example of the first embodiment of the present invention;
Fig. 6 is a block diagram showing a structure of a modulator at a second example of the first embodiment of the present invention;
Fig. 7 is a table showing various parameters at the modulator in the first example of the first embodiment of present invention;
Fig. 8 is a table showing various parameters at the modulator in the second example of the first embodiment of present invention;
Fig. 9 is a diagram showing the number of transmission bits per symbol in the comparison between the conventional technology and the first and second examples of the first embodiment of the present invention; and
Fig. 10 is a block diagram showing a structure of a modulator at a second embodiment of the present invention.

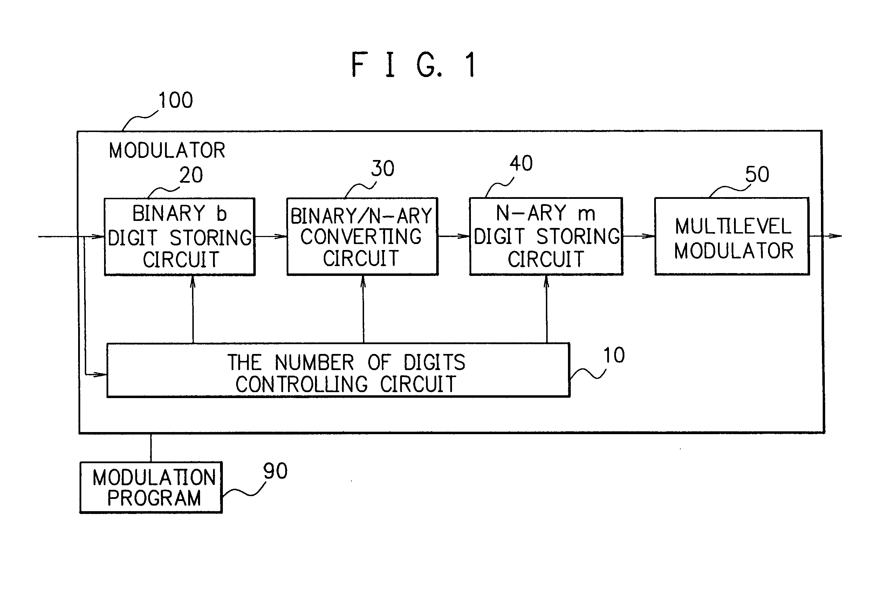

Fig. 1 is a block diagram showing a structure of a modulator 100 at a first embodiment of the present invention. As shown in Fig. 1, the modulator 100 at the first embodiment of the present invention receives binary signals being general communication signals and converts the binary signals into N-ary signals, and generates modulation signals based on the converted N-ary signals and outputs modulated waves. The modulator 100 provides the number of digits controlling circuit 10, a binary b digit storing circuit 20, a binary/N-ary converting circuit 30, an N-ary m digit storing circuit 40, and a multilevel modulator 50.

In this, each of the values of b, N, and m shows one of integers. For example, as the N being the number of multilevel of the output signal, 3 or more integer is used, and each value of the b and m (≧1) is decided in the conditions that 2 ^ b ≦ N ^ m, and the value of N ^ m becomes a close value to the value of 2 ^ b.

The binary b digit storing circuit 20 stores inputted communication data (binary signals), and stores the binary signals b digits each.

The binary/N-ary converting circuit 30 extracts the communication data of the binary signals storing in the binary b digit storing circuit 20 b digits each, and converts the extracted binary signals into N-ary signals of m digits.

The N-ary m digit storing circuit 40 (transmitting data storing circuit) stores the N-ary signals of m digits converted at the binary/N-ary converting circuit 30.

The multilevel modulator 50 generates modulation signals based on the converted N-ary signals storing in the N-ary m digit storing circuit 40, and outputs modulated waves. The multilevel modulator 50 outputs multilevel signals by such as the PSK and the QAM.

The number of digits controlling circuit 10 controls each of the circuits in the modulator 100.

A modulation program 90 shown in Fig. 1 is explained later.

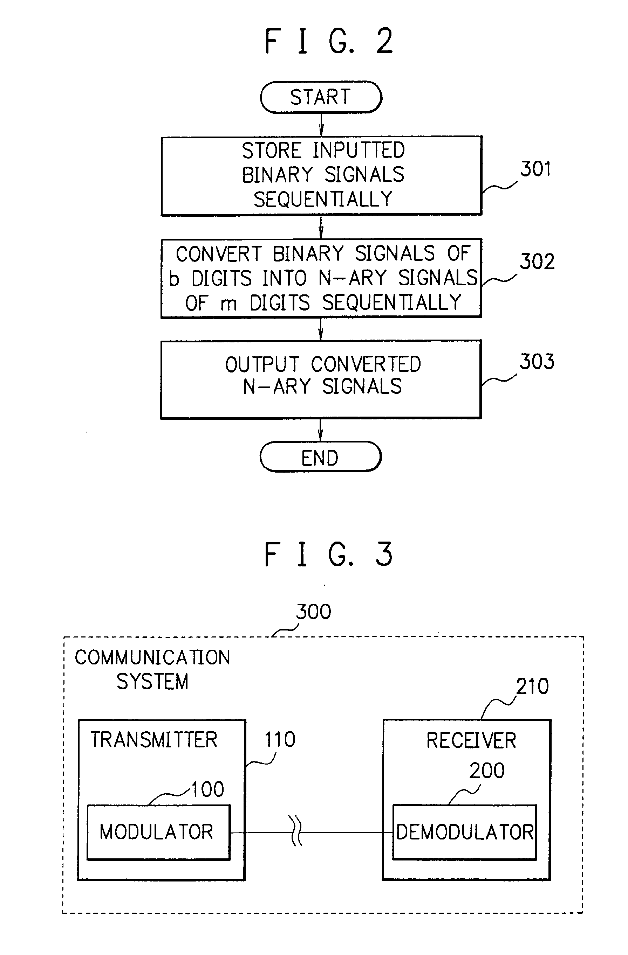

Next, the operation of the modulator 100 at the first embodiment of the present invention is explained. Fig. 2 is a flowchart showing the operation of the modulator 100 at the first embodiment of the present invention.

First, communication data of binary signals are inputted to the input terminal of the modulator 100, and the binary b digit storing circuit 20 stores the inputted communication data b digits each sequentially. The binary b digit storing circuit 20 stores the inputted communication data as the binary signals of b digits (step 301).

The binary/N-ary converting circuit 30 converts the binary signals of b digits storing in the binary b digit storing circuit 20 into N-ary signals of m digits sequentially (step 302).

The N-ary m digit storing circuit 40 stores these converted N-ary signals of m digits sequentially, and the multilevel modulator 50 generates modulation signals based on the stored N-ary signals, and outputs modulated waves (step 303).

At this series of operation, the number of digits controlling circuit 10 adjusts the clock rates of the inputted binary signals and the outputting N-ary signals. For example, the number of digits controlling circuit 10 controls so that the N-ary signals are outputted at the clock rate of (m/b) times of the clock rate of the inputted binary signals.

In order to realize the conversion at the binary/N-ary converting circuit 30, it is necessary that information showing by the binary signals of b digits can be completely shown by the N-ary signals of m digits. Therefore, each integer of the b, N, and m must satisfy the condition of 2 ^ b ≦ N ^ m. And in case that the 2 ^ b is smaller than the N ^m largely, the amount of information per symbol of the converted N-ary signals becomes small, and the efficiency at communication becomes low. Therefore, it is desirable that the value of 2 ^ b is close enough to the value of N ^ m.

And at the conversion operation by the binary/N-ary converting circuit 30, for example, by regarding the binary signals of b digits before converted as binary numbers of b digits and the N-ary signals of m digits after converted as N-ary numbers of m digits, the conversion operation can be executed uniquely by adopting the operation converting the number expression from the binary numbers to the N-ary numbers.

By the series of operation of the modulator 100 at the first embodiment of the present invention, the general communication data of the inputted binary signals are converted into the N-ary signals of m digits from the binary signals of b digits, and the modulation signals are generated based on the N-ary signals, and the modulated waves are outputted.

At the modulator 100 at the first embodiment of the present invention, when the clock rate of the inputted binary signals is shown as R₂, and the clock rate of the outputting N-ary signals is shown as R_{N}, there is a relation of R_{N} = (m/b) × R₂. Generally, since 2 < N, and b > m, the N-ary signals can be outputted at a lower clock rate. With this, the larger amount of information can be transmitted at a certain transmission band, and an effect, which a transmission band to be required at a communication channel whose transmission band is limited can be compressed to (m/b), is obtained.

At the explanation mentioned above, the binary b digit storing circuit 20 sequentially stores the inputted binary signals by gathering them b digits each, and the binary signals of b digits are converted into the N-ary signals of m digits at the binary/N-ary converting circuit 30. However, for example, in case that the inputted communication data are binary signals inputting in parallel b digits each, the inputted binary signals of b digits are converted into the N-ary signals of m digits sequentially every each clock, this method can be adopted. Further, the converted N-ary signals of m digits can be outputted as the N-ary signals of m digits in parallel.

Fig. 3 is a block diagram showing a structure of a communication system 300 using the modulator 100 at the first embodiment of the present invention. As shown in Fig. 3, the N-ary signals applied the phase modulation at the modulator 100 in a transmitter 110 are received at a demodulator 200 in a receiver 210, and the received N-ary signals are converted into the binary signals at the demodulator 200 by applied the phase modulation.

The conversion operation from the N-ary signals to the binary signals at the demodulator 200 can be executed by applying the reverse operation at the modulator 100. For example, the transmitted N-ary signals are stored, and the N-ary signals of m digits are sequentially converted into the binary signals of b digits.

At the conversion operation at the demodulator 200, as mentioned above, the amount of information, which can be shown by the N-ary signals of m digits before converted, is larger than the amount of information, which can be shown by the binary signals of b digits after converted. However, since the N-ary signals before converted are signals generated by that the binary signals of b digits were converted into the N-ary signals of m digits, the binary signals after converted can be obtained uniquely without the shortage of information. At the conversion operation at the demodulator 200, as the same as the conversion operation at the modulator 100, the conversion operation can be executed by adopting the operation converting the number expression from the N-ary numbers to the binary numbers.

Next, referring to the drawings, examples of the modulator at the first embodiment of the present invention are explained in detail.

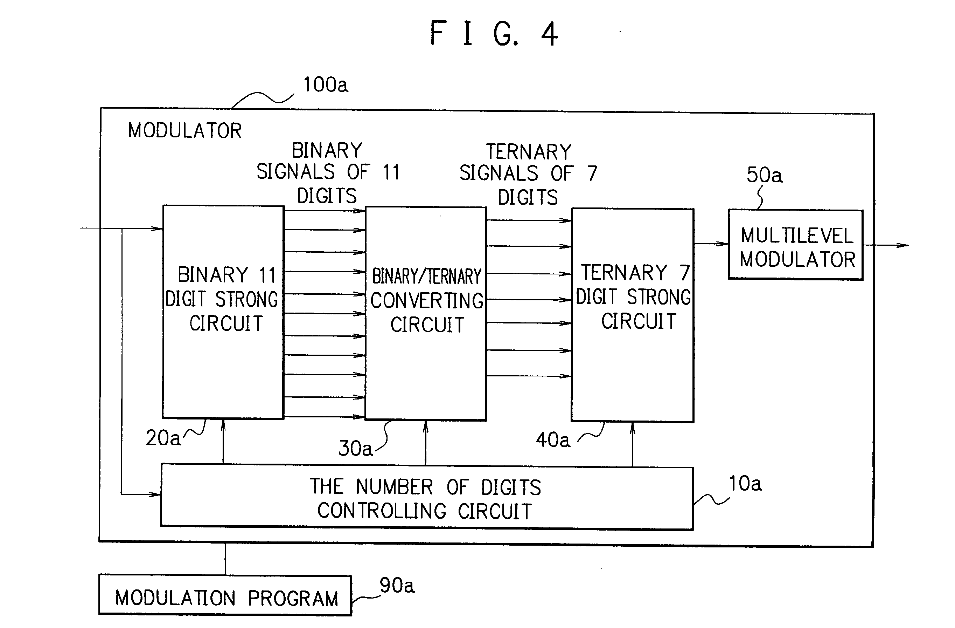

Fig. 4 is a block diagram showing a structure of a modulator 100a at a first example of the first embodiment of the present invention. At the modulator 100a at the first example of the first embodiment of present invention, the value of each integer explained above is set as follows: b = 11, N = 3, and m = 7, that is, the binary signals of 11 digits are converted into the ternary signals of 7 digits.

As shown in Fig. 4, the modulator 100a provides a binary 11 digit storing circuit 20a that stores inputted binary signals 11 digits each, a binary/ternary converting circuit 30a that converts the binary signals of 11 digits into ternary signals of 7 digits, a ternary 7 digit storing circuit 40a that stores the converted ternary signals of 7 digits sequentially, a multilevel modulator 50a that generates modulation signals based on the ternary signals of 7 digits and outputs modulated waves, and the number of digits controlling circuit 10a that controls these three circuits. A modulation program 90a shown in Fig. 4 is explained later.

The operation of the modulator 100a at the first example of the first embodiment of the present invention is the same as that explained at the flowchart shown in Fig. 2. First, the binary 11 digit storing circuit 20a receives communication data of binary signals inputted at the input terminal of the modulator 100a, and stores the binary signals 11 digits each.

The binary/ternary converting circuit 30a converts the binary signals of 11 digits storing in the binary 11 digit storing circuit 20a into the ternary signals of 7 digits. This conversion operation can be executed uniquely, for example, by using a method converting the binary signals of 11 digits into the ternary signals of 7 digits.

The ternary 7 digit storing circuit 40a stores the converted ternary signals of 7 digits, and the multilevel modulator 50a generates modulation signals based on the ternary signals of 7 digits and outputs modulated waves.

In this case, the number of digits controlling circuit 10a controls so that the ternary signals are outputted at a clock rate of (7/11) times of the clock rate of the inputted binary signals, and also controls so that the number of digits of the binary signals is made to be 11 digits and the number of digits of the ternary signals is made to be 7 digits.

At the modulator 100a at the first example of the first embodiment of the present invention, it is possible that the modulator 100a receives binary signals that are inputted in parallel 11 digits each, and converts the binary signals of 11 digits inputted at each clock into the ternary signals of 7 digits sequentially, and outputs the ternary signals in parallel 7 digits each.

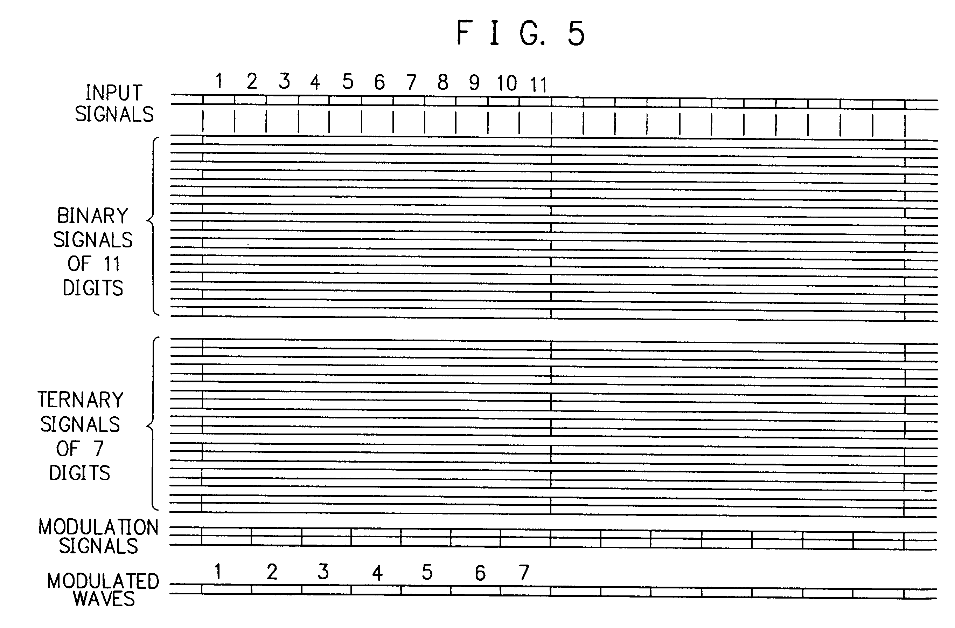

Fig. 5 is a timing chart showing the operation of the modulator 100a at the first example of the first embodiment of the present invention. As shown in Fig. 5, first, the inputted binary signals are stored in the binary 11 digit storing circuit 20a as the binary signals of 11 digits. The binary/ternary converting circuit 30a converts the binary signals of 11 digits storing in the binary 11 digit storing circuit 20a into the ternary signals of 7 digits. The ternary 7 digit storing circuit 40a stores these converted ternary signals of 7 digits. And the multilevel modulator 50a applies time multiplexing to these parallel signals of 7 digits and generates modulation signals being ternary signals in one string in its time and outputs these modulation signals as modulated waves.

In this, the time of the inputted binary signal of 11 digits corresponds to the time of the ternary signal of 7 digits, and this ternary signal of 7 digits is placed in a string in its time. Therefore, when it is decided that the clock rate of the inputted binary signals is R₂ and the clock rate of the outputting ternary signals is R₃, a relation R₃ = (7/11) × R₂ is established, and the modulation signals can be outputted at the slower clock rate being (7/11) times of that of the binary signals. Consequently, an effect, in which the transmission band at the communication channel whose transmission band is limited can be compressed into (7/11), is obtained.

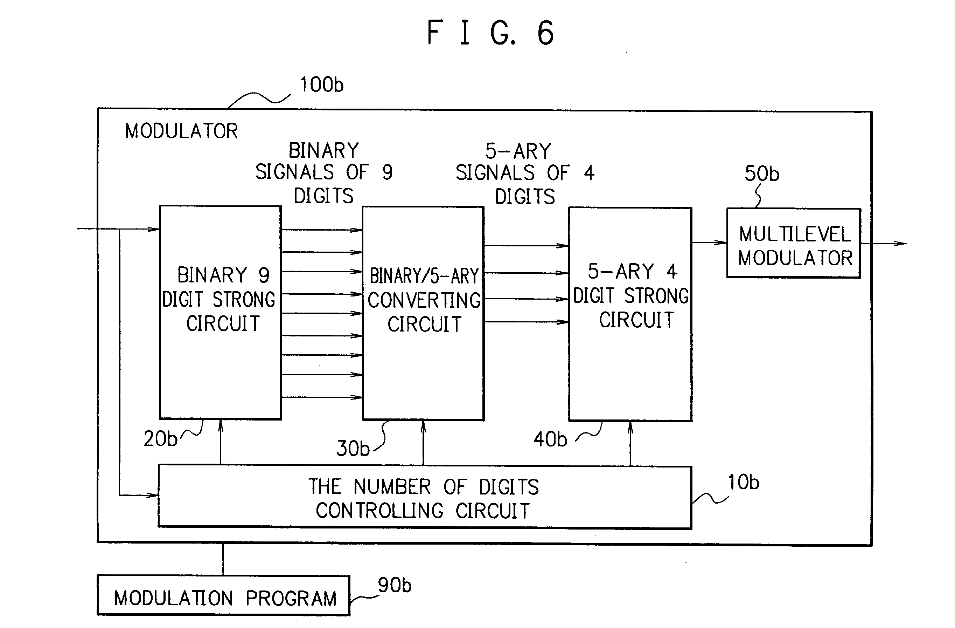

Next, a second example of the first embodiment of the present invention is explained. Fig. 6 is a block diagram showing a structure of a modulator 100b at the second example of the first embodiment of the present invention. At the modulator 100b at the second example of the first embodiment of present invention, the value of each integer explained above is set as follows: b = 9, N = 5, and m = 4, that is, the binary signals of 9 digits are converted into the 5-ary signals of 4 digits.

As shown in Fig. 6, the modulator 100b provides a binary 9 digit storing circuit 20b that stores inputted binary signals 9 digits each, a binary/5-ary converting circuit 30b that converts the binary signals of 9 digits into 5-ary signals of 4 digits, a 5-ary 4 digit storing circuit 40b that stores the converted 5-ary signals of 4 digits sequentially, a multilevel modulator 50b that generates modulation signals based on the 5-ary signals of 4 digits and outputs modulated waves, and the number of digits controlling circuit 10b that controls these three circuits. A modulation program 90b shown in Fig. 6 is explained later.

The operation of the modulator 100b at the second example of the first embodiment of the present invention is the same as that explained at the flowchart shown in Fig. 2. First, the binary 9 digit storing circuit 20b receives communication data of binary signals inputted at the input terminal of the modulator 100b, and stores the binary signals 9 digits each.

The binary/5-ary converting circuit 30b converts the binary signals of 9 digits storing in the binary 9 digit storing circuit 20b into the 5-ary signals of 4 digits. This conversion operation can be executed uniquely, for example, by using a method converting the binary signals of 9 digits into the 5-ary signals of 4 digits.

The 5-ary 4 digit storing circuit 40b stores the converted 5-ary signals of 4 digits, and the multilevel modulator 50b generates modulation signals based on the 5-ary signals of 4 digits and outputs modulated waves.

In this case, the number of digits controlling circuit 10b controls so that the 5-ary signals are outputted at a clock rate of (4/9) times of the clock rate of the inputted binary signals, and also controls so that the number of digits of the binary signals is made to be 9 digits and the number of digits of the 5-ary signals is made to be 4 digits.

Therefore, at the second example of the first embodiment of the present invention, 5PSK is realized. At this time, when the transmission band of the BPSK is shown as " 1 ", the transmission band of QPSK is shown as " 1/2 ", and the transmission band of the 5PSK at this example of the present invention can be made to be " 1/2.25 ".

Consequently, by applying the second example of the first embodiment of the present invention, the communication can be executed effectively by utilizing the transmission band more effectively than at the conventional technology. For example, a case is studied, in this case, it is desired that communication data are transmitted at the transmission rate of 100 Mbps, and only the frequency band which can transmits at the modulation rate of 45M (symbol/sec.) exists. In this case, at the conventional technology, it needs that the number of multilevel for the multilevel modulation is selected from many values such as 4, 8, 16, ...that are separated largely among them. Therefore, at the 8PSK, the modulation rate becomes 33.3 M (symbol/sec.), and the frequency band has too many margins, and at the QPSK (4PSK), the modulation rate becomes 50M (symbol/sec.), and the frequency band cannot be used because of its shortage.

In this case, when the 5PSK at the second example of the first embodiment of the present invention is used, the modulation rate can be set to 44.4 M (symbol/sec.) ( = 100M × (4/9)), therefore, the transmission can be executed.

Further, at the communication channel whose transmission band is limited, a signal to noise ratio (S/N ratio) for realizing a required error rate can be improved by using the transmission band widely without a surplus. Therefore, it is important to match the number of bits per symbol with the allowable transmission band. At the case mentioned above, when the 8PSK is used by having a surplus transmission band, the S/N ratio is required to be 18.91 dB for achieving the error rate of the minus sixth power of 10. However, when the 5PSK is used, the same error rate can be achieved by the S/N ratio of 15.1 dB.

As mentioned above, at the second example of the first embodiment of the present invention, the transmission band can be utilized effectively, and further, the efficiency utilizing the electric power can be improved.

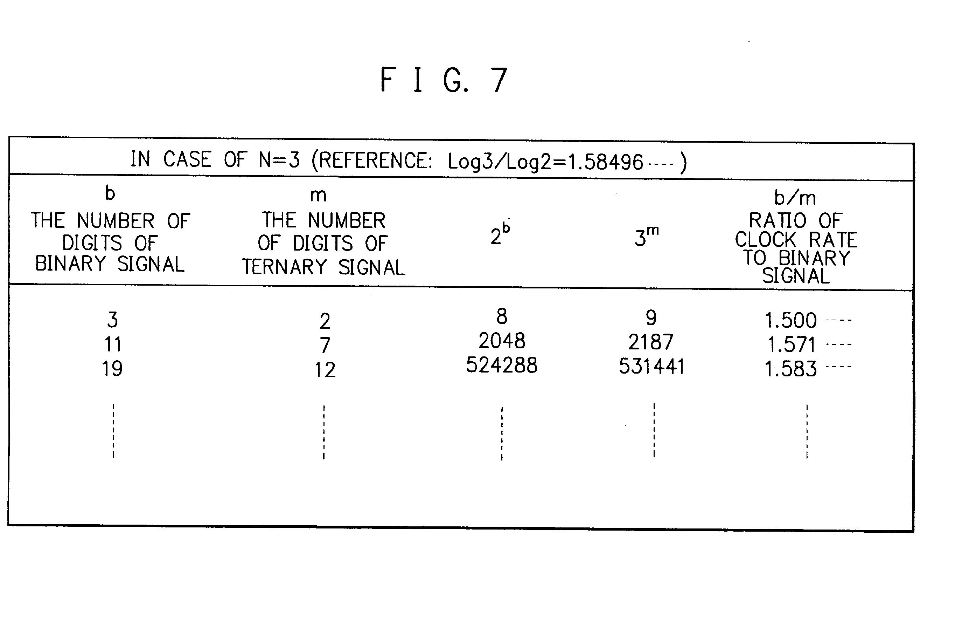

Fig. 7 is a table showing various parameters at the modulator 100a in the first example of the first embodiment of present invention. At the modulator 100a at the first example of the first embodiment of the present invention, it was set that the b = 11 and the m = 7 at the N = 3, however, as shown in Fig. 7, in case that the N = 3, various parameters can be used as the b and m, therefore, more effective communication can be executed at the 3PSK.

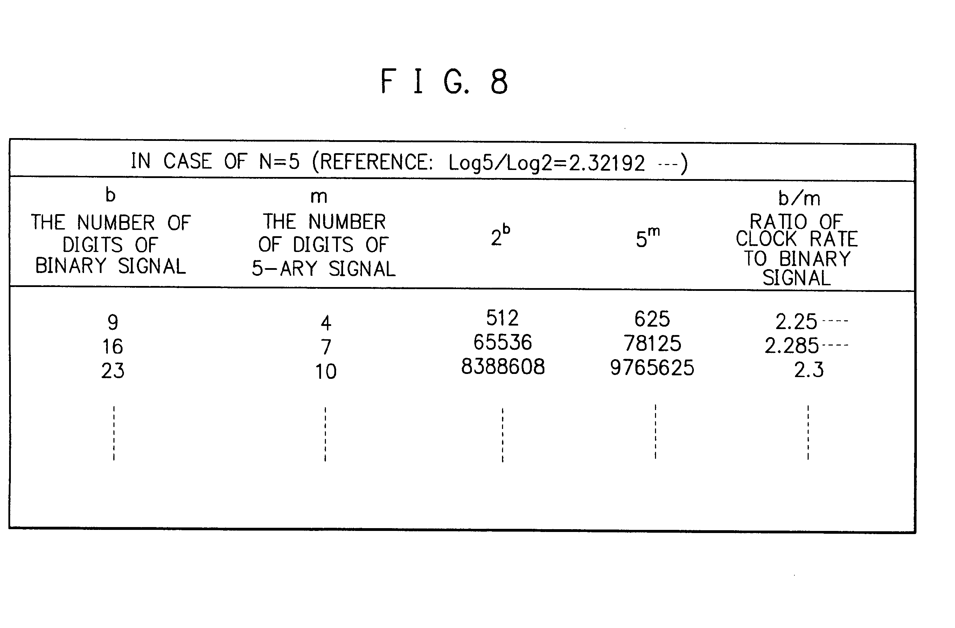

Fig. 8 is a table showing various parameters at the modulator 100b in the second example of the first embodiment of present invention. At the modulator 100b at the second example of the first embodiment of the present invention, it was set that the b = 9 and the m = 4 at the N = 5, however, as shown in Fig. 8, in case that the N = 5, various parameters can be used as the b and m, therefore, more effective communication can be executed at the 5PSK.

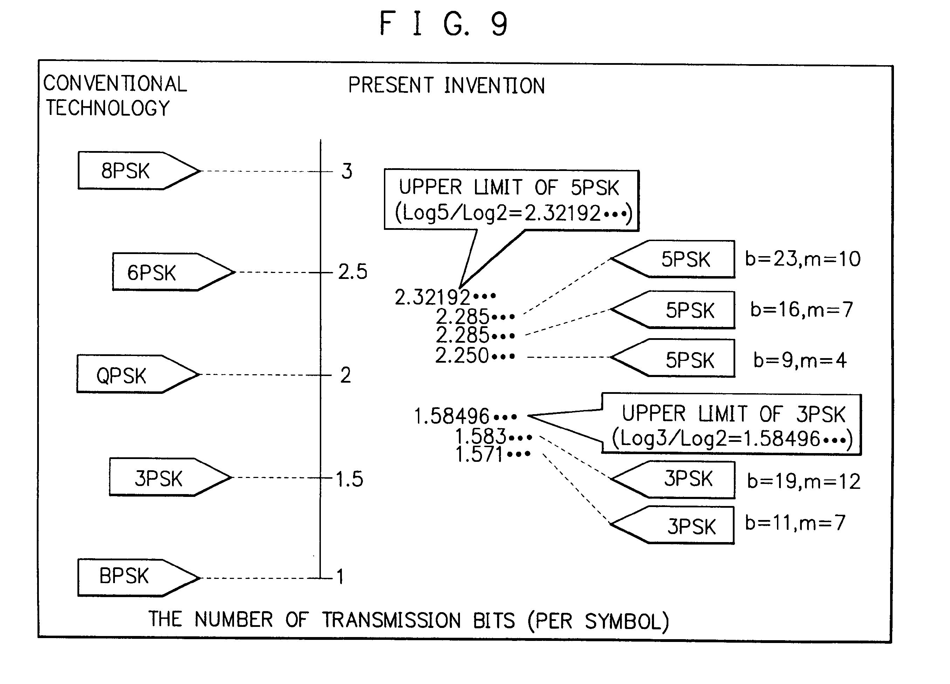

Fig. 9 is a diagram showing the number of transmission bits per symbol in the comparison between the conventional technology and the first and second examples of the first embodiment of the present invention. As shown in Fig. 9, the number of transmission bits per symbol at the multilevel modulation can be realized to be a value being close to Log3/Log2 = 1.58496..., in case of the 3PSK. And the number of transmission bits per symbol at the multilevel modulation can be realized to be a value being close to Log5/Log2 = 2.32192..., in case of the 5PSK.

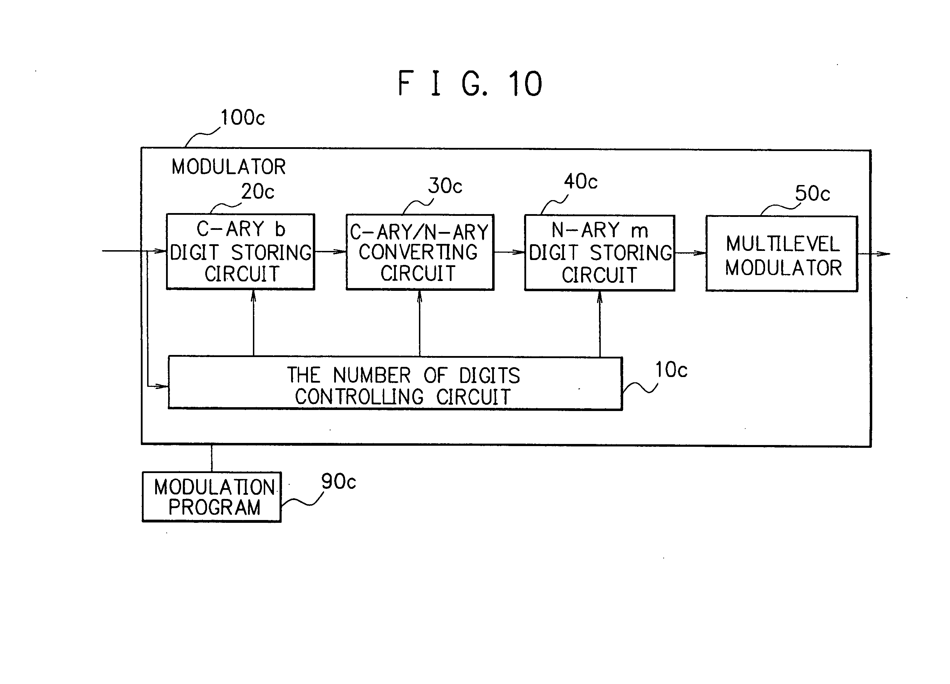

Next, referring to the drawing, a second embodiment of the present invention is explained. Fig. 10 is a block diagram showing a structure of a modulator 100c at the second embodiment of the present invention. At the first embodiment of the modulator of the present invention, the inputted communication data are binary signals being the general communication signals. However, at the second embodiment of the present invention, the inputted communication data are C-ary signals instead of the binary signals, and the inputted C-ary signals are converted into N-ary signals and modulation signals based on the converted N-ary signals are outputted as modulated waves. That is, at the second embodiment of the present invention, the modulator 100c receives multilevel signals and converts the received multilevel signals into multilevel signal being different from the received multilevel signals and generates modulation signals based on the converted multilevel signals and outputs the modulation signals as modulated waves. This operation can be executed at the second embodiment of the present invention.

The modulator 100c outputs modulation signals by converting C-ary signals into N-ary signals by applying a phase modulation. In this, the number of multilevel C is an integer such as 2, 3, 4, 5, ....

As shown in Fig. 10, the modulator 100c provides a C-ary b digit storing circuit 20c, a C-ary/N-ary converting circuit 30c, a N-ary m digit storing circuit 40c, a multilevel modulator 50c, and the number of digits controlling circuit 10c. A modulation program 90c shown in Fig. 10 is explained later.

The operation of the modulator 100c at the second embodiment of the present invention is the same as that explained at the flowchart shown in Fig. 2. First, the C-ary b digit storing circuit 20c stores C-ary signals of b digits by extracting b digits each from the received communication data of the C-ary signals inputted at the input terminal of the modulator 100c.

The C-ary/N-ary converting circuit 30c converts the C-ary signals of b digits storing in the C-ary b digit storing circuit 20c into the N-ary signals of m digits. This conversion operation can be executed uniquely, for example, by using a method converting the C-ary signals of b digits into the N-ary signals of m digits.

The N-ary m digit storing circuit 40c stores the converted N-ary signals of m digits, and the multilevel modulator 50c generates modulation signals based on the N-ary signals of m digits and outputs the modulation signals as modulated waves.

In this case, the number of digits controlling circuit 10c controls so that the N-ary signals are outputted at a clock rate of (m/b) times of the clock rate of the inputted C-ary signals, and also controls so that the number of digits of the C-ary signals is made to be b digits and the number of digits of the N-ary signals is made to be m digits.

As mentioned above, at the second embodiment of the present invention, the modulator 100c receives multilevel signals and converts the received multilevel signals into multilevel signals being different from the received multilevel signals and outputs the modulation signals based on the converted multilevel signals as the modulated waves.

Next, a third embodiment of the present invention is explained. At the third embodiment of the present invention, the modulator itself decides the value of each integer of b, m, and N, based on the transmission band, which can be used currently, and the transmission rate to be required for transmitting communication data. And the modulator outputs modulation signals based on N-ary signals of m digits by converting the communication data into the N-ary of m digits based on the decided values of the b, m, and N. The operation deciding the value of each integer of the b, m, and N is executed by the number of digits controlling circuit.

At the third embodiment of the present invention, it is not necessary that the inputting communication data are binary signals. However, a case, in which the modulator receives binary signals, is explained.

That is, the modulator at the third embodiment of the present invention has a function, which the number of multilevel N of the N-ary signals for the phase modulation can be set freely. And at the changing operation of the number of multilevel N, the value of each integer of the b, m, and N are decided, by obtaining the transmission rate (for example, 100M bps) to be required for transmitting communication data, and by detecting the modulation rate of the transmission band (for example, 45M symbol/sec.).

At the operation deciding the value of N, as mentioned above, it is possible that the N = 5 as the number of multilevel after the modulation was applied, being an integer larger than 2 ^ (100/45) = 4.666. And as shown in Fig. 8, the usable b and m can be decided, based on the number of multilevel N = 5 and the number of multilevel C = 2 of the inputted signals.

There are methods to decide the values of b and m. For example, a method, in which the values of b and m to be selected are provided beforehand for each value of N, is possible, for example, if the N = 5, then b = 9 and m = 4, and so forth. And a method, in which the values of b and m are selected automatically based on the predetermined selecting method. For example, the values of b and m are selected by regarding the communication efficiency as important, or by regarding that the amount of data to be stored is small as important. As shown in Fig. 8, when the values of the b and m are decided to be larger values, the communication efficiency becomes high. And when the values of the b and m are set to be smaller values, the amount of data to be stored in the modulator can be small.

And, at the modulator of the third embodiment of the present invention, the communication data are transmitted by converting into the newly decided N-ary signals by applying the phase modulation.

At the third embodiment of the present invention, in addition to the effects at the first embodiment, the communication can be executed by using the transmission band more suitable and flexible.

At the first, second, and third embodiments of the present invention, the functions of the number of digits controlling circuit, the converting circuit, and other functions in the modulator 100, 100a, 100b, or 100c can be surely realized as hardware. However, these functions can be realized by loading the modulation program 90, 90a, 90b, or 90c being a computer program for these functions in a memory of a computer processing unit. The modulation program 90, 90a, 90b, or 90c can be stored in a recording medium such as a magnetic disk, a semiconductor memory. And the modulation program is loaded in the computer processing unit from the recording medium, and these functions are realized by controlling the operation of the computer processing unit.

As mentioned above, according to the modulator, the communication system, and the modulation program of the present invention, the following effects can be realized.

First, according to the modulator of the present invention, inputted communication data are stored predetermined digits each and the stored communication data of the predetermined digits are converted into multilevel signals of different predetermined digits sequentially, and modulation signals based on the converted multilevel signals are outputted as modulated waves. Therefore, at the conventional multilevel modulation, the number of multilevel for the multilevel modulation is made to be the n th power of 2 such as 4QAM, 16QAM, 32QAM, 64QAM, 128QAM, 256QAM, .... However, at the present invention, it is not always necessary that the number of multilevel is the n th power of 2, and the multilevel modulation can be realized by selecting one of various numbers of multilevel flexibly.

In case that the frequency band has too much margin at the QPSK (4PSK) but the frequency band is too short at the BPSK (2PSK), the 3PSK explained in the first example of the first embodiment of present invention can be used, as an intermediate modulation method between them. As a result, the frequency band can be used effectively, and also the electric power can be used effectively because the 3PSK can be realized at the smaller S/N ratio than that at the QPSK.

Further, at the modulators at first and second examples of the first embodiment of the present invention, as shown in Figs. 7 and 8, the phase modulation can be executed by using one of various parameters, therefore, the effective communication can be realized. That is, in case of the 3PSK, the number of transmission bits per symbol at the multilevel modulation can be realized to be a value close to Log3/Log2 = 1.58496 ..., and in case of the 5PSK, the number of transmission bits per symbol at the multilevel modulation can be realized to be a value close to Log5/Log2 = 2.32192....

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A modulator, which applies a phase modulation to communication data, wherein:
inputted communication data are converted into plural multilevel signals of predetermined amount of data, and modulation signals based on said converted plural multilevel signals of said predetermined amount of data are outputted sequentially as modulated waves.

2. A modulator in accordance with claim 1, comprising:
a storing circuit that stores said inputted communication data;
a converting circuit that converts said communication data storing in said storing circuit into said plural multilevel signals of said predetermined amount of data; and
a multilevel modulator that generates said modulation signals based on said plural multilevel signals of said predetermined amount of data converted at said converting circuit, and outputs said modulated waves.

3. A modulator in accordance with claim 2, wherein:
each of b, C, m, and N is defined as one of integers, and
said inputted communication data of C-ary signals are extracted b digits each sequentially from said storing circuit, and extracted C-ary signals of b digits are converted into N-ary signals of m digits sequentially at said converting circuit.

4. A modulator in accordance with claim 3, wherein:
said integer C being the number of multilevel of inputting communication data is 2.

5. A modulator in accordance with claim 3, wherein:
at the setting of each value of said integers b, C, m, and N,
the value of the m th power of N is larger than the value of the b th power of C, and also the value of the m th power of N is close enough to the value of the b th power of C.

6. A modulator in accordance with claim 3, wherein:
each value of said integers b, m, and N is decided, based on a currently usable transmission band and a transmission rate to be required for communication data to be transmitted, and
said inputted communication data are converted into N-ary signals of m digits, based on said decision.

7. A modulator in accordance with claim 3, wherein:
each value of said integers is set as b = 11, C = 2, m = 7, and N = 3, and
said inputted communication data of binary signals are extracted 11 digits each sequentially, and extracted binary signals of 11 digits are converted into ternary signals of 7 digits sequentially at said converting circuit.

8. A modulator in accordance with claim 3, wherein:
each value of said integers is set as b = 9, C = 2, m = 4, and N = 5, and
said inputted communication data of binary signals are extracted 9 digits each sequentially, and extracted binary signals of 9 digits are converted into 5-ary signals of 4 digits sequentially at said converting circuit.

9. A modulator in accordance with any one of claims 3 to 8, wherein:
said communication data of C-ary signals are inputted to said modulator in series.

10. A modulator in accordance with any one of claims 3 to 9,
wherein: said communication data of C-ary signals are inputted to said modulator in parallel b digits each.

11. A communication system, which executes communication by using multilevel signals, comprising:
a modulator, which applies a phase modulation to communication data; and
a demodulator, wherein:
said modulator converts inputted communication data into plural multilevel signals of predetermined amount of data sequentially, and transmits modulation signals based on said converted plural multilevel signals of said predetermined amount as modulated waves to said demodulator sequentially.

12. A communication system in accordance with claim 11, wherein:
each of b, C, m, and N is defined as one of integers, and
said inputted communication data of C-ary signals are extracted b digits each sequentially, and extracted C-ary signals of b digits are converted into N-ary signals of m digits sequentially at said modulator.

13. A communication system in accordance with claim 12, wherein:
said integer C being the number of multilevel of inputting communication data is 2.

14. A communication system in accordance with claim 12, wherein:
at the setting of each value of said integers b, C, m, and N,
the value of the m th power of N is larger than the value of the b th power of C, and also the value of the m th power of N is close enough to the value of the b th power of C.

15. A communication system in accordance with claim 12,
wherein:
each value of said integers b, m, and N is decided, based on a currently usable transmission band and a transmission rate to be required for communication data to be transmitted, and
said inputted communication data are converted into N-ary signals of m digits, based on said decision.

16. A communication system in accordance with claim 12, wherein:
each value of said integers is set as b = 11, C = 2, m = 7, and N = 3, and
said inputted communication data of binary signals are extracted 11 digits each sequentially, and extracted binary signals of 11 digits are converted into ternary signals of 7 digits sequentially at said modulator.

17. A communication system in accordance with claim 12, wherein:
each value of said integers is set as b = 9, C = 2, m = 4, and N = 5, and
said inputted communication data of binary signals are extracted 9 digits each sequentially, and extracted binary signals of 9 digits are converted into 5-ary signals of 4 digits sequentially at said modulator.

18. A system in accordance with any one of claims 12 to 17, wherein:
said communication data of C-ary signals are inputted to said modulator in series.

19. A system in accordance with any one of claims 12 to 18, wherein:
said communication data of C-ary signals are inputted to said modulator in parallel b digits each.

20. A modulation program, which applies a phase modulation to communication data by controlling a computer, wherein:
inputted communication data are converted into plural multilevel signals of predetermined amount of data, and modulation signals based on said converted plural multilevel signals of said predetermined amount of data are outputted sequentially as modulated waves.

21. A modulation program in accordance with claim 20, wherein:
each of b, C, m, and N is defined as one of integers, and
said inputted communication data of C-ary signals are extracted b digits each sequentially, and extracted C-ary signals of b digits are converted into N-ary signals of m digits sequentially.

22. A modulation program in accordance with claim 20, wherein:
said integer C being the number of multilevel of inputting communication data is 2.

23. A modulation program in accordance with claim 20, wherein:
at the setting of each value of said integers b, C, m, and N,
the value of the m th power of N is larger than the value of the b th power of C, and also the value of the m th power of N is close enough to the value of the b th power of C.

24. A modulation program in accordance with claim 20, wherein:
each value of said integers b, m, and N is decided, based on a currently usable transmission band and a transmission rate to be required for communication data to be transmitted, and
said inputted communication data are converted into N-ary signals of m digits, based on said decision.

25. A modulation program in accordance with any one of claims 20 to 24, wherein:
said communication data of C-ary signals are inputted in series.

26. A modulation program in accordance with any one of claims 20 to 25, wherein:
said communication data of C-ary signals are inputted in parallel b digits each.
